(19) Europäisches Patentamt
European Patent Office
Office européen des brevets

(11) **EP 0 738 748 B1**

(12) **FASCICULE DE BREVET EUROPEEN**

(45) Date de publication et mention de la délivrance du brevet:
**17.08.2005 Bulletin 2005/33**

(51) Int Cl.⁷: **C08J 5/06**

(21) Numéro de dépôt: **96103938.5**

(22) Date de dépôt: **13.03.1996**

(54) **Procédé pour traiter un corps en acier inoxydable de façon à favoriser son adhésion à une composition de caoutchouc**

Verfahren zur Behandlung eines rostfreien Stahlgegenstandes zur Verbesserung seiner Adhäsion an einer Gummizusammensetzung

Process for treating a stainless steel article to improve its adhesion to a rubber composition

(84) Etats contractants désignés:
**AT BE CH DE ES FR GB IT LI LU NL SE**

(30) Priorité: **29.03.1995 FR 9503795**

(43) Date de publication de la demande:
**23.10.1996 Bulletin 1996/43**

(73) Titulaire: **COMPAGNIE GENERALE DES ETABLISSEMENTS MICHELIN-MICHELIN & CIE 63040 Clermont-Ferrand Cédex (FR)**

(72) Inventeurs:
• **Tonon, Corinne**
  **F-69008 Lyon (FR)**
• **Grimberg, Bruno**
  **F-63000 Clermont-Ferrand (FR)**
• **Lenabour, David**
  **F-63100 Clermont-Ferrand (FR)**

• **Person, Patrice**
  **F-63000 Clermont-Ferrand (FR)**

(74) Mandataire: **Hiebel, Robert Michelin & Cie, Service SGD/LG/PI Ladoux 63040 Clermont-Ferrand Cedex 01 (FR)**

(56) Documents cités:
**FR-A- 2 320 974        GB-A- 1 315 814
GB-A- 2 091 131        US-A- 4 250 226**

• **DATABASE WPI Week 8034 Derwent Publications Ltd., London, GB; AN 80-59320C XP002009438 & JP-A-55 089 374 (TOYODA GOSEI KK) , 6 Juillet 1980**
• **FALBE J.: 'RöMPP CHEMIE LEXIKON', vol. 4, 1998, STUTTGART pages 2890 - 2891**

## Description

La présente invention concerne les procédés permettant l'adhésion entre des corps métalliques et des caoutchoucs, ces corps métalliques étant notamment des renforts utilisés pour renforcer des articles en caoutchouc qui peuvent être par exemple des articles manufacturés divers, comme des tuyaux, des nappes, des courroies, des enveloppes de pneumatiques, les renforts métalliques étant par exemple des fils, des assemblages de fils, des tringles.

L'invention concerne également les articles obtenus avec ces procédés.

L'invention concerne tout particulièrement le cas où les corps métalliques sont en acier inoxydable.

Il est connu d'incorporer dans les compositions de caoutchoucs des composés métalliques, notamment des composés de cobalt, pour favoriser l'adhésion des renforts métalliques à du caoutchouc. De tels composés sont décrits par exemple dans les FR-A-2 198 830, US-A-2 912 355.

Cette technique présente les inconvénients suivants :

- les composés métalliques modifient profondément les propriétés de mise en oeuvre et les performances des compositions vulcanisées, en particulier la tenue au vieillissement thermique et thermo-oxydant est notablement altérée ; de plus, l'incorporation de ces composés dans les compositions est coûteuse, sans oublier le fait que les métaux de ces composés peuvent être soumis à des aléas de pénurie ;

- l'adhésion ne peut être en général obtenue que sur des surfaces en cuivre, en zinc, en laiton ou en bronze, de telle sorte qu'il est nécessaire d'effectuer un revêtement avec ces métaux ou alliages sur le renfort métallique lorsque celui-ci a une constitution différente, par exemple lorsqu'il est en acier, qui est très couramment utilisé pour les renforts ; un tel revêtement métallique est difficile à effectuer sur des surfaces en acier inoxydable car il est alors généralement nécessaire d'appliquer une sous-couche, par exemple en nickel, avant d'effectuer ce revêtement ;

- les performances en adhésion des renforts obtenus sont parfois insuffisantes, et on peut observer en particulier une mauvaise tenue de l'adhésion aux températures élevées, une dégradation au cours du temps et/ou vis-à-vis de la corrosion, notamment la corrosion en présence d'eau.

Il est connu d'utiliser des revêtements de laiton formés d'un dépôt électrolytique ou chimique de cuivre et de zinc, ce laiton bien diffusé permettant un collage avec des compositions qui contiennent des taux faibles en composé de cobalt, ou qui peuvent même être dépourvues de tels composés. Ces revêtements présentent l'inconvénient d'être plus difficiles à réaliser que les revêtements précités et le collage ainsi obtenu a une mauvaise résistance au vieillissement thermique ou au vieillissement thermo-oxydant, par exemple en présence d'eau.

US-A-4 441 946 et FR-A-2 320 974 décrivent un procédé pour faire adhérer de l'acier à une composition de caoutchoucs en appliquant un silane à la surface de l'acier avant de mettre celui-ci au contact de la composition. Les aciers inoxydables ne sont pas mentionnés dans ces documents.

La présente invention concerne un procédé pour faire adhérer de façon simple et économique un acier inoxydable particulier à une composition de caoutchouc sans que l'acier soit revêtu d'une matière métallique différente de l'acier, et sans qu'il soit nécessaire que la composition comporte un composé organométallique favorisant l'adhésion, l'adhésion pouvant cependant se faire même en présence d'un tel composé.

De préférence le silane de départ a la formule suivante :

$$R\text{-}Si\text{-}(OR')_{3-a}$$

$$(R'')_a$$

dans laquelle

R représente un radical organique contenant au moins une fonction susceptible de réagir avec au moins un élément de la composition ;

chaque OR' représente un groupe susceptible de réagir avec un oxyde ou hydroxyde de la surface de l'acier inoxydable ;

chaque R'' représente, de façon indépendante, l'hydrogène, un radical organique cyclique ou acyclique, ou un halogène ;

a, qui peut être nul, est au plus égal à 2.

R peut par exemple comporter au moins une fonction susceptible de réagir avec au moins un caoutchouc de la composition ou avec au moins une résine contenue dans la composition ou avec au moins un autre composant contenu dans la composition.

R est de préférence un hydroxyalkyle, un aminoalkyle, un polyaminoalkyle, un époxyalkyle, notamment un glycidylalkyle, un halogénoalkyle, un mercaptoalkyle, un alkylsulfure ou un alkylpolysulfure pouvant contenir un atome de silicium, un azidoalkyle, un radical cyclique ou acyclique comportant au moins une double liaison.

Chaque R' est par exemple, de façon indépendante, l'hydrogène, un radical organique ou organométallique cyclique ou acyclique.

Lorsque R' est un radical organométallique, il comporte de préférence au moins un atome de silicium.

Chaque R' est de préférence, de façon indépendante, l'hydrogène, un alkyle ayant de 1 à 6 atomes de carbone, un radical organométallique comportant de 1 à 6 atomes de carbone et au moins un atome de silicium.

Chaque R" est de préférence, de façon indépendante, un alkyle ayant de 1 à 6 atomes de carbone.

a est de préférence égal à 0 ou 1.

Des exemples de ces composés qui peuvent être utilisés sont le 3-aminopropyl-triéthoxysilane, le 3-glycidoxypropyl-triméthoxysilane, le 3-mercaptopropyl-triméthoxysilane, le N-béta-aminoéthyl-3-aminopropyl-triméthoxysilane, le 3-aminopropyl-triméthoxysilane, le 3-aminoéthyl-triéthoxysilane, le 3-glycidoxyéthyl-triéthoxysilane, le 3-mercaptopropyl- triéthoxysilane, le N-béta-aminoéthyl-3-aminoéthyl-triméthoxysilane, le 3-aminobutyl- triéthoxysilane, le 3-aminoéthyl-triméthoxysilane, le 3-aminopropyl-méthyl-diéthoxysilane, le tétrasulfure de bis triéthoxy silylpropyle, le tétrasulfure de bis triméthoxy silylpropyle, le p-(triméthoxysilyl)benzyl diazoacétate, le 4- (triméthoxysilyl)cyclohexylsulfonyl azidure, le 6-(triméthoxysilyl)hexylsulfonyl azidure.

Des composés préférés sont le 3-aminopropyl-triéthoxysilane, le N-béta-aminoéthyl-3-aminopropyl- triméthoxysilane, le 3-glycidoxypropyl-triméthoxysilane, le 3-mercaptopropyl-triméthoxysilane et le 3-aminopropyl-méthyl- diéthoxysilane.

Le 3-aminopropyl-triéthoxysilane est spécialement préféré.

On peut utiliser un seul silane ou un mélange de silanes.

Le silane est de préférence soluble dans l'eau ou dans un mélange d'eau et d'alcool, une telle solution permettant par exemple l'hydrolyse du silane de départ.

L'invention concerne également les articles en caoutchouc comportant une composition de caoutchouc renforcée par un corps métallique dont au moins la surface est en acier inoxydable, susceptibles d'être obtenus selon le procédé conforme à l'invention.

Ces articles sont par exemple des tuyaux, des courroies, des enveloppes de pneumatiques.

Le caoutchouc de la composition est de préférence un caoutchouc insaturé, par exemple le caoutchouc naturel, un caoutchouc synthétique. Des exemples de tels caoutchoucs synthétiques sont le polyisoprène, le polybutadiène, le polychloroprène, le caoutchouc butyle, les copolymères styrène-butadiène, les copolymères acrylonitrile- butadiène-styrène, les terpolymères EPDM (éthylène-propylène-diène). Cependant, le ou les caoutchoucs de la composition peuvent aussi être saturés, par exemple les copolymères éthylène-propylène. Ces caoutchoucs peuvent être réticulés par exemple sous l'action du soufre, des peroxydes ou des bismaléïmides avec ou sans soufre, les agents de réticulation étant incorporés dans la composition, ou ils peuvent être dépourvus de système de réticulation, comme par exemple des caoutchoucs thermoplastiques.

La composition peut comporter un seul caoutchouc ou un mélange d'au moins deux caoutchoucs de même type ou de types différents, par exemple elle peut comporter un mélange d'un caoutchouc insaturé et d'un caoutchouc saturé.

La composition peut comporter en outre les charges et additifs habituels, comme par exemple du noir de carbone, de la silice, de l'acide stéarique, de l'oxyde de zinc, des accélérateurs de vulcanisation, des agents contre le vieillissement, notamment des antioxydants, des huiles ou des agents facilitant la mise en oeuvre, des résines renforçantes, notamment des résines de type phénol-formol ou résorcinol-formol.

Le corps métallique est de préférence un renfort, par exemple un fil, un ruban, un assemblage de fils et/ou de rubans, en particulier un câble, une tringle.

Le silane est de préférence utilisé sous forme d'une solution, la concentration du silane dans la solution étant par exemple comprise entre 0,05 % en poids et 10 % en poids, de préférence entre 0,1 % en poids et 5 % en poids. Dans certains cas, une légère acidification du solvant améliore les performances de l'organosilane.

Il est nécessaire que la surface du corps soit activée avant contact avec le silane. Cette activation peut être effectuée de diverses façons connues dans la technique, par exemple un traitement chimique, de préférence un traitement acide, ou un traitement physique, de préférence un traitement par des plasmas. La surface du corps est de préférence activée par une solution acide aqueuse, par exemple de l'acide phosphorique aqueux. On peut aussi utiliser par exemple dans ce but un bain sulfochromique.

On peut par exemple rincer la surface, après cette activation, avec de l'eau et la sécher à l'air.

Il faut noter qu'il s'agit là d'un véritable traitement d'activation qui modifie la surface en acier inoxydable, sans qu'il soit possible de déterminer de façon précise la nature de cette modification qui se traduit peut-être par la formation d'hydroxydes ou d'oxydes non stoechiométriques de nickel et de chrome. Il ne s'agit pas d'un simple nettoyage, par exemple un lavage, destiné à enlever les salissures ou les impuretés à la surface de l'acier inoxydable, sans modifier celle-ci. Il est cependant préféré de laver aussi la surface, en particulier lors de la réalisation de fils fins par tréfilage, soit avant le traitement d'activation, soit pendant la période d'activation, par exemple en utilisant un traitement avec un bain acide contenant un agent tensio-actif, un tel bain permettant ces deux opérations simultanément.

Le dépôt du silane sur le corps peut être obtenu par tout procédé connu, en discontinu ou en continu, par exemple une application avec un pinceau, par trempage, par pulvérisation.

Après l'application du silane, la surface du corps peut être par exemple séchée à l'air ambiant ou par chauffage dans un four ou dans un tunnel, le chauffage étant par exemple obtenu par conduction au contact de gaz chaud, ou par voie électrique, notamment par effet Joule ou par induction. Ce chauffage permet le départ du ou des solvants éventuels, ainsi que la réaction d'au moins un silane avec la surface en acier inoxydable du corps, il permet aussi la réticulation du ou des silanes, et donc formation d'un réseau polymère silane, pour donner un film dépourvu, ou pratiquement dépourvu, de composés autres que des silanes.

Le corps ainsi traité conformément à l'invention peut être mis directement au contact de la composition de caoutchouc, sans couche adhésive, cette composition contenant éventuellement une résine renforçante connue de type phénol-formol ou résorcinol-formol à un taux qui est par exemple de 0,1 à 20 % en poids de la composition, de préférence entre 1 et 8 % en poids de la composition. Par exemple, si le silane choisi contient une fonction aminée, la composition de caoutchouc contiendra de préférence une résine renforçante de type phénol-formol ou une résine de type résorcinol-formol, le formol pouvant être remplacé par d'autres donneurs de méthylène, comme l'hexaméthylène tétramine (HMTA) ou l'hexa(méthoxyméthyl)mélamine (H3M). Dans le cas où le silane réagit avec une résine, cette réaction s'effectue de préférence lors de la vulcanisation du caoutchouc, si celui-ci est vulcanisable.

Si le silane choisi contient une fonction mercapto, polysulfure, azidure ou alcène, la composition pourra alors contenir un simple système de réticulation (par exemple le soufre, un accélérateur de vulcanisation, un peroxyde), le silane réagissant alors directement avec le caoutchouc lors de la vulcanisation.

Dans tous les cas précités, les résines renforçantes peuvent être, le cas échéant, obtenues in situ lors de la cuisson de la composition, celle-ci contenant alors, avant la cuisson, les constituants de base de cette résine, par exemple du résorcinol et un durcisseur comme l'HMTA.

L'adhésion entre le métal et la composition de caoutchouc est obtenue à l'issue de la cuisson de cette composition qui est opérée de préférence sous pression. En outre, les réactions précitées des silanes avec l'acier inoxydable ainsi que les réticulations précitées des silanes peuvent éventuellement se produire au moins partiellement lors de cette cuisson.

I. Définitions et tests

1. Mesures dynamométriques

Les mesures de résistance à la rupture, de force à la rupture et d'allongement après rupture des fils d'acier sont effectuées en traction selon la méthode AFNOR NF A 03-151 de juin 1978.

2. Ductilité en torsion

Par définition, la ductilité en torsion d'un fil est le nombre de tours de torsion sur lui-même que le fil peut supporter. Cette mesure est réalisée sur une longueur de fil égale à 500 fois le diamètre. On maintient une extrémité de ce fil dans une mâchoire fixe, et on maintient l'autre extrémité dans une mâchoire rotative que l'on fait tourner de telle sorte que l'axe de rotation soit le même que l'axe du fil, la tension lors de cette torsion étant égale à 5 % de la force de rupture en traction du fil mesurée avant torsion, et on compte le nombre de tours nécessaires pour provoquer la rupture du fil.

3. Structure des aciers

L'identification et la quantification de la structure des aciers sont effectuées de la façon suivante.

On utilise une méthode par diffraction des rayons X. La méthode utilisée consiste à déterminer l'intensité diffractée totale pour chacune des phases de l'acier, en particulier la martensite $\alpha'$, la martensite $\varepsilon$ et l'austénite gamma, en sommant l'intensité intégrée de tous les pics de diffraction de cette phase, ce qui permet de calculer les pourcentages de chacune des phases par rapport à l'ensemble de toutes les phases de l'acier. Les spectres de diffraction des rayons X sont déterminés sur la section du fil à étudier avec un goniomètre, à l'aide d'une anticathode de chrome.

Un balayage permet d'obtenir les raies caractéristiques de chacune des phases présentes. Dans le cas des trois phases précitées (les deux martensites et l'austénite), le balayage est de 50 degrés à 160 degrés.

Pour déterminer les intensités intégrées des pics, il est nécessaire de déconvoluer les raies qui interfèrent.

On a la relation suivante pour chaque pic d'une phase quelconque :

$$I_{int} = (L_{mh} \times I_{max})/P$$

avec :

$I_{int}$ = l'intensité intégrée du pic
$L_{mh}$ = la largeur à mi-hauteur du pic (en degrés)
$I_{max}$ = l'intensité du pic (en coups par seconde)
$P$ = le pas de mesure du pic (0,05 degré).

On a par exemple les raies caractéristiques suivantes :

| austénite gamma | raie (111) | $2\Theta = 66,8$ |
|---|---|---|
| | raie (200) | $2\Theta = 79,0$ |
| | raie (220) | $2\Theta = 128,7$ |
| martensite $\alpha'$ | raie (110) | $2\Theta = 68,8$ |
| | raie (200) | $2\Theta = 106$ |
| | raie (211) | $2\Theta = 156,1$ |

| | | |
|---|---|---|
| martensite ε | raie (100) | 2Θ = 65,4 |
| | raie (002) | 2Θ = 71,1 |
| | raie (101) | 2Θ = 76,9 |
| | raie (102) | 2Θ = 105,3 |
| | raie (110) | 2Θ = 136,2 |

L'angle 2Θ est l'angle total en degrés entre le faisceau incident et le faisceau diffracté.

Les structures cristallographiques des phases précédentes sont les suivantes : austénite gamma : cubique à faces centrées

martensite $\alpha'$ : cubique centrée ou quadratique centrée
martensite ε : hexagonale compacte.

On peut alors calculer le pourcentage en volume d'une phase quelconque "i", par la relation suivante :

$$\% \text{ de la phase "i"} = I_i / I_t$$

avec
$I_i$ = somme des intensités intégrées de tous les pics de cette phase "i"
$I_t$ = somme des intensités intégrées de tous les pics de toutes les phases de diffraction de l'acier.

On a donc en particulier :

$\%$ de martensite $\alpha' = I_{\alpha'}/I_t$
$\%$ de martensite $\varepsilon = I_\varepsilon/I_t$
$\%$ total de martensite $= (I_{\alpha'} + I_\varepsilon)/I_t$
$\%$ d'austénite gamma $= I_{gamma}/I_t$

avec :

$I_{\alpha'}$= intensité intégrée de tous les pics de la martensite $\alpha'$
$I_\varepsilon$ = intensité intégrée de tous les pics de la martensite ε
$I_{gamma}$ = intensité intégrée de tous les pics de l'austénite gamma.

Dans ce qui suit, les divers % concernant les phases de la structure de l'acier sont exprimés en volume et les termes "martensite" ou "phase martensite" couvrent l'ensemble des phases martensite $\alpha'$ et martensite ε, le terme % en martensite représentant donc le % en volume du total de ces deux phases martensitiques et le terme "austénite" représente l'austénite gamma.

Les % en volume des diverses phases, déterminés par la méthode précédente, sont obtenus avec une précision d'environ 5 %.

4. Mesures de collage

Les mesures de collage sont effectuées sur des renforts métalliques qui sont soit des fils isolés soit des assemblages de fils.

La qualité de la liaison entre un renfort métallique et une composition de caoutchouc est appréciée par un test dans lequel on mesure la force nécessaire pour extraire les renforts de la composition vulcanisée, dit encore vulcanisat. Le vulcanisat est un bloc de caoutchouc constitué de deux plaques de dimension 300 mm x 150 mm et d'épaisseur 3,5 mm, appliquées l'une sur l'autre avant la cuisson (l'épaisseur du bloc résultant est alors de 7 mm). C'est lors de la confection de ce bloc, que les renforts, au nombre de douze, sont emprisonnés entre les deux plaques crues et seule une longueur de renfort de 1 cm est alors laissée libre pour venir au contact de la composition à laquelle cette longueur de renfort se liera pendant la cuisson. Le reste de la longueur des renforts est recouvert d'un film fin d'aluminium pour empêcher toute adhésion en dehors de la zone de 1 cm. Le bloc comportant les renforts est alors placé dans un moule adapté et cuit sous une pression de 11 bars.

La température et le temps de cuisson du bloc sont fonction des conditions de test recherchées, comme indiqué ci-après.

Cuisson simple

On chauffe le bloc à une température de 140°C ou 150°C pendant un temps pouvant aller de 30 minutes à 2 heures, sous une pression de 11 bars.

Surcuisson (tenue thermique)

Cette surcuisson, effectuée à la place de la cuisson simple, est un traitement qui permet de déterminer la résistance des échantillons à la chaleur seule. On chauffe le bloc à 140 °C pendant 6 heures, sous une pression de 11 bars.

Vieillissement thermique en phase humide

Ce traitement permet de déterminer la résistance des échantillons à l'action combinée de la chaleur et de l'eau.
Après la cuisson simple on place les échantillons en atmosphère de vapeur d'eau saturante à 110°C pendant 16 heures.

A l'issue de la cuisson simple, ou de la surcuisson, ou du vieillissement thermique en phase humide, le bloc est découpé en éprouvettes servant d'échantillons , contenant chacune un renfort, que l'on tractionne à l'aide d'une machine de traction. La vitesse de traction est de 50 mm/min.

On caractérise ainsi l'adhérence par la force nécessaire pour arracher le renfort de l'éprouvette (force d'arrachage) à 20°C (moyenne des 12 mesures correspondant aux 12 renforts).

## II Exemples

L'invention sera aisément comprise à l'aide des exemples non limitatifs qui suivent.

Dans tous ces essais toutes les données concernant les formulations des compositions de caoutchouc ou de résine sont des parties en poids, sauf indication différente.

## IIA Exemples sur des fils isolés

Dans tous ces essais on utilise des fils d'acier inoxydable identiques ayant la composition suivante : C : 0,08 ; Cr : 18,3 ; Ni : 8,75 ; Mo : 0,3 ; Mn : 0,8 ; Si : 0,75 ; Cu : 0,3 ; N : 0,04 ; S : 0,001; P : 0,019 ; le reste étant constitué de fer avec les impuretés inévitables habituelles. Tous ces chiffres concernant la composition de l'acier sont des % en poids. La structure de cet acier comporte plus de 50 % en volume de martensite et moins de 50 % en volume d'austénite.

Ces fils ont les caractéristiques suivantes : diamètre : 1,3 mm ; résistance à la rupture : 2250 MPa ; allongement après rupture : 1 %.

Ces fils sont préparés par écrouissage d'un fil machine en acier inoxydable de structure austénitique, ce fil machine ayant un diamètre de 5,5 mm.

Ces fils sont utilisés tels quels (chacun d'eux est alors appelé par la suite "fil nu") ou avec un revêtement de laiton appliqué sur un revêtement de nickel, dans les essais témoins, non conformes à l'invention (chacun d'eux est alors appelé par la suite "fil laitonné"). Le laiton utilisé est un laiton réalisé par codépôt électrolytique de cuivre et de zinc contenant 69% de cuivre, ce laiton pouvant être utilisé pour coller à des compositions dépourvues de composés de cobalt. L'épaisseur du revêtement équivaut à 52 mg de laiton pour 100g de fil.

On utilise dans ces exemples les trois compositions connues de caoutchouc qui suivent.

## Composition 1

Cette composition, qui comporte une résine renforçante, a la formulation suivante :

| Caoutchouc naturel | 100 |
|---|---|
| Noir N326 | 75 |
| Oxyde de zinc | 6 |
| Acide stéarique | 1 |
| Antioxydant | 1 |
| Résine phénol-formol | 4 |
| Soufre | 6 |
| Sulfénamide | 1 |
| Durcisseur | 1,6 |

## Composition 2

Cette composition qui est dépourvue de résine renforçante a la formulation suivante :

| Caoutchouc naturel | 100 |
|---|---|
| Noir N326 | 45 |
| Oxyde de zinc | 8 |
| Acide stéarique | 0,5 |
| Antioxydant | 1 |
| Soufre | 6 |
| Sulfénamide | 1 |

## Composition 3

Cette composition comporte une résine renforçante et un coupage caoutchouc naturel/SBR. Elle a la formulation suivante :

| Caoutchouc naturel | 50 |
|---|---|
| SBR | 50 |
| Noir N326 | 60 |
| Oxyde de zinc | 8 |
| Acide stéarique | 0,5 |
| Antioxydant | 1 |
| Résine phénol-formol | 8 |
| Durcisseur | 3 |
| Soufre | 7 |
| Sulfénamide | 1 |

Dans les trois compositions précédentes on a les significations suivantes :

- SBR : copolymère de butadiène-styrène préparé en solution avec une catalyse alkyl-lithium, ce copolymère comprenant 26% de styrène et 74 % de butadiène, la phase butadiènique comportant 24% de liaisons vinyliques 1-2. La température de transition vitreuse (Tg) du copolymère est de -48°C et sa viscosité Mooney (100°C) est de 54.
- Noir N326: dénomination conforme à la norme ASTM D-1765.
- Antioxydant: N-(1,3-diméthylbutyl)-N'-phényl-p-phénylènediamine.
- Sulfénamide: N-dicyclohexyl-2-benzothiazol-sulfénamide.
- Résine phénol-formol : précondensat de type SFP 118 (société Schenectady)
- Durcisseur: Hexaméthylène tétramine (HMTA).

Les trois compositions sont dépourvues de promoteur d'adhésion de type sel de cobalt.

Exemple 1 (non conforme à l'invention)

Un fil nu est traité à 50°C pendant 30 secondes avec une solution aqueuse d'acide phosphorique de pH 1 (concentration en poids d'acide phosphorique environ 2,5 %) contenant un agent tensio-actif (solution Ultraspeed 4353 de la société Condat, Chasse sur Rhône, France, diluée à 10 % en volume), puis on le rince à l'eau et on le sèche à l'air ambiant.
On effectue ensuite le test d'adhésion entre le fil nu ainsi traité et la composition 1, après cuisson simple effectuée pendant 60 minutes à 150°C. On obtient une force d'arrachage de 5 daN.
Cet essai montre que l'adhésion est mauvaise.

Exemple 2 (non conforme à l'invention)

On effectue le test d'adhésion entre un fil laitonné et la composition 1 après cuisson simple pendant 60 minutes à 150°C. On obtient une force d'arrachage de 96 daN.
Cet essai montre que l'adhésion est meilleure que dans l'exemple précédent, grâce à la présence du laiton.

Exemple 3 (non conforme à l'invention)

On effectue le test d'adhésion entre un fil laitonné et la composition 1 après surcuisson pendant 6 heures à 140°C. La force d'arrachage est de 70 daN.
Cet essai montre que la surcuisson provoque une diminution notable de l'adhésion, cette déchéance étant d'environ 27 %.

Exemple 4 (non conforme à l'invention)

On effectue le test d'adhésion entre un fil laitonné et la composition 1 après cuisson simple pendant 60 minutes à 150°C suivie du vieillissement thermique en phase humide.
La force d'arrachage ainsi déterminée est de 7 daN.
Cet essai montre que l'adhésion subit une diminution considérable après le traitement de vieillissement thermique en phase humide, cette déchéance étant d'environ 93 %.

Exemple 5 (conforme à l'invention)

Un fil nu est traité de la même façon que dans l'exemple 1 à la différence qu'après le séchage à l'air on le trempe dans une solution 90/10 (en volume) éthanol/eau de 3-aminopropyl-triéthoxysilane (concentration d'environ 1 % en poids) et on le sèche pendant 1 minute à 160°C. On effectue alors le test d'adhésion entre le fil ainsi traité et la composition 1 après cuisson simple pendant 60 minutes à 150°C.
La force d'arrachage obtenue est de 72 daN, c'est-à-dire quelle est acceptable. La solution acide de traitement permet à la fois le nettoyage de la surface métallique et son activation avant le traitement au silane. Après le traitement au silane, la surface métallique est recouverte d'un film constitué uniquement, ou pratiquement uniquement, de silane réticulé.

Exemple 6 (conforme à l'invention)

On effectue le test d'adhésion entre un fil nu traité comme dans l'exemple 5 et la composition 1 après surcuisson pendant 6 heures à 140°C.
La force d'arrachage obtenue est de 69 daN, c'est-à-dire qu'il n'y a pratiquement pas de déchéance par rapport à l'exemple 5.

Exemple 7 (conforme à l'invention)

On effectue le test d'adhésion entre un fil nu traité comme dans l'exemple 5 et la composition 1 après cuisson simple pendant 60 minutes à 150°C et vieillissement thermique en phase humide.
La force d'arrachage obtenue est de 65 daN.
On constate que la déchéance de cette force par rapport à l'exemple 5 est très faible, puisqu'elle est d'environ 10 %.

Exemple 8 (non conforme à l'invention)

On effectue le test d'adhésion entre un fil laitonné et la composition 2, après cuisson simple pendant 90 min à 140°C. On obtient la force d'arrachage de 90 daN.

Exemple 9 (non conforme à l'invention)

On effectue le test d'adhésion entre un fil laitonné et la composition 2, après surcuisson pendant 6 h à 140°C. On obtient pratiquement la même force d'arrachage que dans l'exemple 8, probablement par suite de l'absence de résine dans la composition 2.

Exemple 10 (non conforme à l'invention)

On effectue le test d'adhésion entre un fil laitonné et la composition 2 après cuisson simple pendant 90 min à 140°C, puis après vieillissement thermique en phase humide. On obtient une force d'arrachage de 25 daN. La déchéance par rapport à l'exemple 8 est d'environ 72 %, c'est-à-dire qu'elle est très importante.

Exemple 11 (conforme à l'invention)

Un fil nu est traité comme dans l'exemple 5 avec la différence que l'on utilise une solution aqueuse du silane.
On dépose ensuite au trempé un adhésif de type RFL sur le fil ainsi traité.
La synthèse de l'adhésif est effectuée en deux étapes.

Première étape

Dans cette étape on réalise une solution de résine dont la formulation est la suivante :

| | |
|---|---|
| H$_2$O | 100 |
| Formaldéhyde 31% dans l'eau | 14,7 |
| Résorcinol | 8,1 |
| Solution de NaOH 1 mol/l | 5,9 |

La précondensation de la résine s'effectue pendant quatre heures à température ambiante.

Deuxième étape

Dans cette deuxième étape, on réalise une suspension aqueuse à partir du précondensat précédent et d'un latex, la composition de la suspension étant la suivante :

| | |
|---|---|
| H$_2$O | 100 |
| Latex 40% dans l'eau | 34,6 |
| Précondensat | 23,5 |
| Solution de NH$_4$OH d = 0,92 | 4,1 |

Le caoutchouc du latex est un terpolymère vinylpyridine-styrène-butadiène comportant 15% de motifs vinylpyridine. Sa tension superficielle est de 47,5 mJ/m$^2$ et sa viscosité Mooney à 100°C est de 37.

Les caractéristiques de l'adhésif ainsi préparé sont les suivantes :

- Pourcentage en masse d'extrait sec de la résine = 10 % ;
- masse de résine/masse d'extrait sec du latex = 0,17 ;
- nombre de moles de formol/nombre de moles de résorcinol = 2 ;
- nombre de moles de NaOH/nombre de moles de résorcinol = 7,5 x 10$^{-2}$.

Lors de cette seconde étape, la postcondensation s'effectue pendant seize heures à la température ambiante.

L'adhésif appliqué sur le fil est séché pendant 3 min à 150°C. On effectue alors le test d'adhésion entre le fil ainsi traité et la composition 2 après cuisson simple de 90 minutes à 140°C. La force d'arrachage ainsi obtenue est de 86 daN qui est pratiquement celle de l'exemple 8.

Exemple 12 (conforme à l'invention)

On traite un fil nu comme dans l'exemple 11.

On effectue ensuite le test d'adhésion entre le fil ainsi traité et la composition 2, après une surcuisson pendant 6 heures à 140°C. On obtient ainsi une force d'arrachage de 79 daN, ce qui représente une déchéance d'environ 8 % par rapport à l'exemple 11, ce qui est très faible.

Exemple 13 (conforme à l'invention)

On effectue le test d'adhésion entre le fil traité conformément à l'exemple 11 et la composition 2, après une cuisson simple effectuée pendant 90 minutes à 140°C et après vieillissement thermique en phase humide. On obtient ainsi une force d'arrachage de 36 daN ce qui représente une déchéance par rapport à l'exemple 11 d'environ 58 %, c'est-à-dire beaucoup moins que dans l'exemple 10.

IIB Exemples avec des assemblages de renfort

Dans les exemples qui suivent on utilise comme renfort des assemblages de fils et on mesure leur adhérence au contact d'une composition de caoutchouc.

Les assemblages sont constitués de fils en acier inoxydable ayant la composition suivante :
C : 0,096 ; Cr : 17,6 ; Ni : 7,7 ; Mo : 0,7 ; Mn : 1,3 ; Si : 2,0 ; Cu : 0,2 ; N : 0,04 ; S : 0,001 ; P : 0,019 ; le reste étant constitué de fer avec les impuretés inévitables habituelles. Tous ces chiffres concernant la composition de l'acier sont des % en poids.
Les fils qui constituent les assemblages sont conformes à la demande de brevet européen n° 94115799.2 et à la demande de brevet français n° 9412372, ces demandes étant incorporées par référence dans la présente demande. Ces fils ont les caractéristiques données ci-après.

Pour les exemples 14 à 25 :

diamètre : 0,224 mm ; résistance à la rupture : 2805 MPa ; force à la rupture : 110 N ; allongement après rupture : 1 % ; ductilité en torsion : 60 tours ; structure : phase martensitique pratiquement égale à 85 % en volume, cette phase étant pratiquement uniquement de la martensite α', la phase d'austénite étant pratiquement de 15 % en volume.

Pour les exemples 26 à 28 :

diamètre : 0,18 mm ; résistance à la rupture : 2500 MPa ; force à la rupture : 63,6 N ; allongement après rupture : 1 % ; ductilité en torsion : 70 tours ; structure : phase martensitique pratiquement égale à 57 % en volume, cette phase étant pratiquement uniquement de la martensite α', la phase d'austénite étant pratiquement de 43 % en volume.

Ces fils sont utilisés dans les assemblages soit tels quels (chacun d'eux est alors appelé par la suite "fil nu") soit avec un revêtement de laiton dans les essais témoins, non conformes à l'invention (chacun d'eux est alors appelé par la suite "fil laitonné"). Le laiton utilisé est un laiton thermique contenant 64 % de cuivre. Ce laiton est réalisé par diffusion thermique après dépôt d'une couche de cuivre suivi d'un dépôt d'une couche de zinc. Ce laiton est destiné à être utilisé pour coller à des compositions de caoutchouc comportant des composés de cobalt. L'épaisseur du revêtement de laiton est de 0,19 μm sur le fil fin, après tréfilage, le laitonnage étant réalisé sur une mince couche de nickel déposée au préalable directement au contact de l'acier inoxydable, avant tréfilage.

Dans les exemples 14 à 25 qui suivent, on utilise des assemblages qui ont tous le même type désigné 6x23NF.
Chacun de ces assemblages, dépourvu de frette, est constitué de trois torons, chaque toron étant constitué de deux fils tordus ensemble avec un pas de 12,5 mm, la torsion des fils d'un toron étant effectuée en sens inverse de celle des fils des deux autres torons, tous ces torons étant tordus ensemble avec un pas d'assemblage de 12,5 mm, le sens d'enroulement de l'assemblage étant le même que le sens d'enroulement des fils dans les deux torons dont les fils s'enroulent dans le même sens.

Dans les exemples 26 à 28 on utilise des assemblages de type 19.18 non frettés, chaque assemblage étant un assemblage à couches dont les caractéristiques sont les suivantes :

- un fil d'âme non tordu ;
- une couche intermédiaire de six fils enroulés autour de l'âme avec un pas de 10 mm ;
- une couche externe de douze fils enroulés autour de la couche intermédiaire et dans le même sens que cette couche intermédiaire, avec un pas de 10 mm.

Dans les exemples 14 à 25 qui suivent on utilise les compositions 1, 2 ou 3 décrites précédemment, avec la différence que, dans le cas des assemblages avec fils laitonnés, ces compositions comportent en outre 1 partie en poids de naphténate de cobalt pour 100 parties en poids d'élastomère (compositions 1 ou 2) ou de coupage d'élastomères (composition 3).

Exemple 14 (non conforme à l'invention)

On effectue le test d'adhésion entre un assemblage constitué de fils laitonnés et la composition 1, après cuisson simple pendant 60 min à 150°C. On détermine ainsi une force d'arrachage d'environ 48 daN.

Exemple 15 (non conforme à l'invention)

On effectue le test d'adhésion entre un assemblage constitué de fils laitonnés et la composition 1, après surcuisson pendant 6h à 140°C. On obtient alors une force d'arrachage de 39 daN. La déchéance par rapport à l'exemple 14 est d'environ 19 %.

Exemple 16 (non conforme à l'invention)

On effectue le test d'adhésion entre un assemblage constitué de fils laitonnés et la composition 1 après cuisson simple pendant 60 minutes à 150°C suivie du vieillissement thermique en phase humide.
La force d'arrachage ainsi déterminée est de 28 daN.
Cet essai montre que l'adhésion subit une diminution considérable après le traitement de vieillissement thermique en phase humide, cette déchéance étant d'environ 42 %.

Exemple 17 (conforme à l'invention)

On traite un assemblage de fils nus comme dans l'exemple 5. Puis, on dépose au trempé sur l'assemblage de fils ainsi traité un adhésif de type dissolution dont la formulation est la suivante:

| | |
|---|---|
| Caoutchouc naturel | 100 |
| Noir N326 | 47 |
| Silice | 8 |
| Oxyde de zinc | 5 |
| Acide stéarique | 2 |
| Antioxydant | 1 |
| Résine résorcinol-formol | 5 |
| Soufre | 3 |
| Sulfénamide | 1 |
| Durcisseur | 5 |

Antioxydant, sulfénamide et durcisseur : mêmes caractéristiques que pour les compositions 1, 2 et 3.
Silice de type Ultrasil VN3 (société Degussa)
Résine résorcinol-formol: précondensat de type SRF 1500 (société Schenectady).
La composition est dissoute dans l'heptane, la concentration en matière solide étant égale à 10 % en poids.
L'adhésif est séché pendant 3 min à 160°C.
On effectue alors le test d'adhésion entre les assemblages de fils ainsi traités et la composition 2 après cuisson simple pendant 90 min à 140°C.
On obtient alors une force d'arrachage égale à 42 daN.

Exemple 18 (conforme à l'invention)

On traite un assemblage de fils nus de la même façon que dans l'exemple 17. On effectue ensuite le test d'adhésion entre les assemblages ainsi traités et la composition 2 après cuisson simple pendant 90 min à 140°C suivie du vieillissement thermique en phase humide.

La force d'arrachage ainsi déterminée est de 46 daN. Il n'y a donc pas de déchéance par rapport à l'exemple 17.

Exemple 19 (conforme à l'invention)

Un assemblage de fils nus est activé par la même solution d'acide phosphorique que dans l'exemple 1, à 50°C pendant 30 secondes, puis on le rince à l'eau et on le sèche à l'air ambiant. Il est alors trempé dans une solution aqueuse de 3-glycidoxypropyl-triméthoxysilane de pH 4 (concentration 1% en poids, acidification à l'acide acétique) et séché pendant 1 minute à 160°C.
On dépose ensuite sur l'assemblage de fils ainsi traité le même adhésif que dans l'exemple 17.
On effectue alors le test d'adhésion entre l'assemblage de fils ainsi traité et la composition 2 après cuisson simple de 90 min à 140°C.
La force d'arrachage obtenue est de 35 daN.

Exemple 20 (conforme à l'invention)

On effectue le test d'adhésion entre un assemblage de fils nus traité comme dans l'exemple 19 et la composition 2 après surcuisson pendant 6 heures à 140°C.
La force d'arrachage obtenue est de 35 daN, c'est-à-dire qu'il n'y a pas de déchéance par rapport à l'exemple 19.

Exemple 21 (conforme à l'invention)

Un assemblage de fils nus est activé par la même solution d'acide phosphorique que l'exemple 1, à 50°C pendant 30 secondes, puis on le rince à l'eau et on le sèche à l'air ambiant. Il est alors trempé dans une solution aqueuse de 3-mercaptopropyl-triméthoxysilane de pH 3 (concentration de 1% en poids, acidification à l'acide acétique) et séché pendant 1 minute à 160°C.
On effectue alors le test d'adhésion entre l'assemblage de fils ainsi traité et la composition 1 après cuisson simple de 60 minutes à 150°C.
La force d'arrachage obtenue est de 25 daN.

Exemple 22 (conforme à l'invention)

On effectue le test d'adhésion entre un assemblage de fils nus traité comme dans l'exemple 21 et la composition 1 après surcuisson pendant 6 heures à 140°C.

La force d'arrachage ainsi obtenue est de 35 daN, c'est-à-dire qu'elle est meilleure qu'après une cuisson simple (exemple 21).

Exemple 23 (conforme à l'invention)

Un assemblage de fils nus est activé par la même solution d'acide phosphorique que dans l'exemple 1, à 50°C pendant 30 secondes, puis on le rince à l'eau et on le sèche à l'air ambiant. Il est alors trempé dans une solution 90/10 (en volume) éthanol/eau de 3-aminopropyl-méthyl-diéthoxysilane (concentration de 1% en poids) et séché pendant 1 minute à 160°C.
On dépose ensuite sur l'assemblage de fils ainsi traité le même adhésif que dans l'exemple 17.
On effectue alors le test d'adhésion entre l'assemblage de fils ainsi traité et la composition 2 après une cuisson simple de 90 minutes à 140°C.
La force d'arrachage obtenue est de 40 daN.

Exemple 24 (conforme à l'invention)

Un assemblage de fils nus est traité comme dans l'exemple 5.
On effectue alors le test d'adhésion entre l'assemblage ainsi traité et la composition 3 après une cuisson simple de 60 minutes à 140°C.
La force d'arrachage obtenue est de 32 daN.

Exemple 25 (conforme à l'invention)

On effectue le test d'adhésion entre un assemblage de fils nus traité comme dans l'exemple 24 et la composition 3 après surcuisson pendant 6 heures à 140°C.
La force d'arrachage obtenue est de 30 daN, c'est-à-dire qu'il n'y a pratiquement pas de déchéance par rapport à l'exemple 24.

Exemple 26 (conforme à l'invention)

On traite un assemblage 19.18 (fils nus) comme dans l'exemple 17, à la différence que le traitement avec la solution d'acide phosphorique est effectué pendant 15 secondes à 70°C. On effectue ensuite le test d'adhésion entre cet assemblage ainsi traité et la composition 4 dont la formulation est la suivante :

| | |
|---|---|
| Caoutchouc naturel | 100 |
| Noir N326 | 60 |
| Oxyde de zinc | 9 |
| Antioxydant | 1 |
| Acide stéarique | 0,5 |
| Soufre | 9 |
| Sulfénamide | 1 |

Dans cette formulation la définition du noir, de l'antioxydant et du sulfénamide sont les mêmes que celles données pour les formulations 1 à 3.

Le test d'adhésion est effectué après cuisson simple pendant 1 h à 140°C. La force d'arrachage obtenue est de 50 daN, c'est-à-dire qu'elle est bonne.

On traite d'autre part l'assemblage comme décrit plus haut dans cet exemple, avec la différence qu'avant la silanisation, après le traitement avec la solution acide, on effectue en outre un traitement de la surface avec un plasma d'oxygène et on effectue ensuite le test d'adhésion avec la formulation 4, après cuisson simple pendant 1 h à 140°C. La force d'arrachage obtenue est de 53 daN, c'est-à-dire qu'elle est un peu supérieure à la précédente mais la différence n'est pas importante. Ceci montre que le traitement avec la solution acide décrite dans l'exemple 5 permet à la fois un bon nettoyage de la surface métallique et une bonne activation de cette surface, une activation ultérieure (par exemple au plasma, comme décrit dans cet exemple) n'étant pas nécessaire avant le traitement au silane.

Exemple 27 (conforme à l'invention)

On traite un assemblage 19.18 de la même façon que dans l'exemple 26, avec et sans traitement au plasma, avec la différence que l'on utilise une solution aqueuse de potasse et de carbonate de sodium (concentration en KOH : 2 moles/litre ; concentration en $CO_3Na_2$ : 0,5 mole/litre) au lieu de la solution de l'exemple 5 et que le traitement est effectué pendant une minute à environ 50°C, sous l'action conjointe d'ultrasons. Les tests de cuisson simple, effectués comme dans l'exemple 26, donnent les valeurs suivantes :

- sans traitement au plasma : 38 daN ;
- avec traitement au plasma : 53 daN.

On constate donc que la solution de potasse ne permet pas une activation satisfaisante de la surface avant le traitement au silane, mais que cette solution permet un nettoyage satisfaisant de la surface de telle sorte que le traitement au plasma permet une bonne activation de la surface avant la silanisation et permet d'obtenir une force d'arrachage satisfaisante.

Exemple 28 (non conforme à l'invention)

On traite un assemblage 19.18 de la même façon que dans l'exemple 26, avec et sans traitement au plasma, avec la différence que l'on utilise de l'éthanol au lieu de la solution de l'exemple 5 et que le traitement est réalisé pendant 5 minutes à environ 50°C avec l'action conjointe d'ultrasons. Les tests de cuisson simple, effectués comme dans l'exemple 26 donnent les valeurs suivantes :

- sans traitement au plasma : 32 daN ;
- avec traitement au plasma : 32 daN.

On constate donc que ces deux valeurs sont les mêmes et qu'elles sont faibles. L'éthanol ne permet donc pas d'obtenir une activation de la surface avant le traitement au silane, et il ne permet pas non plus de nettoyer de façon efficace la surface de telle sorte que le traitement d'activation au plasma est inefficace.

L'invention présente les avantages suivants :

- On évite l'utilisation de composés organométalliques dans les compositions de caoutchouc dont les performances restent ainsi stables ; on réduit d'autre part les coûts d'incorporation et les risques de pénurie ;

- il est possible d'utiliser directement la surface inoxydable de l'objet, sans qu'il soit nécessaire d'effectuer un revêtement métallique, par exemple un revêtement de laiton ;

- l'adhésion des corps en acier inoxydable, traités conformément à l'invention, aux compositions de caoutchouc reste généralement élevée, même après surcuisson ou après vieillissement thermique en phase humide, alors que les revêtements de laiton, utilisables avec ou sans composés de cobalt, présentent souvent une déchéance importante après surcuisson et surtout après vieillissement thermique en phase humide.

Comme montré dans les exemples, il est préférable de nettoyer la surface métallique avant d'effectuer le traitement d'activation, ou pendant ce traitement, ce nettoyage étant particulièrement conseillé lorsque le diamètre du fil est faible, par exemple de l'ordre de 0,18 mm, car les nombreuses déformations, en particulier les nombreux tréfilages, nécessaires pour obtenir ce faible diamètre favorisent l'apparition de salissures sur la surface. Les exemples ont montré l'utilisation de solutions aqueuses acides ou alcalines pour effectuer ce nettoyage, mais d'autres méthodes connues sont possibles.

Le traitement d'activation décrit dans les exemples conformes à l'invention faisait appel à une solution aqueuse acide ou à un plasma, mais d'autres techniques connues sont possibles.

Bien entendu l'invention n'est pas limitée aux exemples de réalisation précités.

**Revendications**

**1.** Procédé pour préparer un article en caoutchouc comportant une composition de caoutchouc renforcée par, et à laquelle adhère, un corps métallique dont au moins la surface est en acier inoxydable, **caractérisé par** les points suivants :

- l'acier inoxydable a une teneur en carbone de 0,02% à 0,2%, une teneur en nickel de 3% à 20%, une teneur en chrome de 12% à 28%, avec une somme de nickel et de chrome de 20% à 35% (% en poids) ;

- la structure de l'acier inoxydable comporte au moins 20% de martensite, et elle est dépourvue d'austénite ou en comporte moins de 80% (% en volume) ;

- on active la surface du corps métallique, au moins en partie, avec une solution aqueuse acide ou un plasma ;

- on traite ensuite cette surface avec au moins un silane de départ pour qu'elle soit recouverte d'un film de silane(s) ;

- on met la surface du corps métallique ainsi traité directement au contact de la composition de caoutchouc, sans couche adhésive ;

- on provoque la cuisson de la composition de caoutchouc.

2. Procédé selon la revendication 1, **caractérisé en ce que** le silane a la formule suivante :

$$R\text{-Si-}(OR')_{3-a}(R'')_a$$

dans laquelle:

- R représente un radical organique contenant au moins une fonction susceptible de réagir avec au moins un élément de la composition ;
- chaque OR' représente un groupe susceptible de réagir avec un oxyde ou hydroxyde de la surface de l'acier inoxydable ;
- chaque R'' représente, de façon indépendante, l'hydrogène, un radical organique cyclique ou acyclique, ou un halogène ;
- a, qui peut être nul, est au plus égal à 2.

3. Procédé selon la revendication 2, **caractérisé en ce que** R comporte au moins une fonction susceptible de réagir avec au moins un caoutchouc de la composition ou avec au moins une résine contenue dans la composition ou avec au moins un autre composant contenu dans la composition.

4. Procédé selon l'une quelconque des revendications 2 ou 3, **caractérisé en ce que** R est un hydroxyalkyle, un aminoalkyle, un polyaminoalkyle, un époxyalkyle.

5. Procédé selon l'une quelconque des revendications 2 à 4, **caractérisé en ce que** R est un glycidylalkyle, un halogénoalkyle, un mercaptoalkyle, un alkylsulfure ou un alkylpolysulfure pouvant contenir un atome de silicium, un azidoalkyle, un radical cyclique ou acyclique comportant au moins une double liaison.

6. Procédé selon l'une quelconque des revendications 2 à 5, **caractérisé en ce que** chaque R' est, de façon indépendante, l'hydrogène, un radical organique ou organométallique cyclique ou acyclique.

7. Procédé selon l'une quelconque des revendications 2 à 6, **caractérisé en ce que** lorsque R' est un radical organométallique, il comporte de préférence au moins un atome de silicium.

8. Procédé selon l'une quelconque des revendications 2 à 7, **caractérisé en ce que** chaque R' est, de façon indépendante, l'hydrogène, un alkyle ayant de 1 à 6 atomes de carbone, un radical organométallique comportant de 1 à 6 atomes de carbone et au moins un atome de silicium.

9. Procédé selon l'une quelconque des revendications 2 à 8, **caractérisé en ce que** chaque R'' est, de façon indépendante, un alkyle ayant de 1 à 6 atomes de carbone.

10. Procédé selon l'une quelconque des revendications 2 à 9, **caractérisé en ce que** a est égal à 0 ou 1.

11. Procédé selon l'une quelconque des revendications 2 à 10, **caractérisé en ce que** le silane est choisi parmi les composés suivants : le 3-aminopropyltriéthoxysilane, le 3-glycidoxypropyl-triméthoxysilane, le 3-mercaptopropyl-triméthoxysilane, le N-béta-aminoéthyl-3-aminopropyl-triméthoxysilane, le 3-aminopropyltriméthoxysilane, le 3-aminoéthyl-triéthoxysilane, le 3-glycidoxyéthyl-triéthoxysilane, le 3-mercaptopropyl-triéthoxysilane, le N-béta-aminoéthyl-3-aminoéthyl-triméthoxysilane, le 3-aminobutyl-triéthoxysilane, le 3-aminoéthyl-triméthoxysilane, le 3-aminopropyl-méthyl-diéthoxysilane, le tétrasulfure de bis triéthoxy silylpropyle, le tétrasulfure de bis triméthoxy silylpropyle, le p-(triméthoxysilyl)benzyl diazoacétate, le 4- (triméthoxysilyl)cyclohexylsulfonyl azidure, le 6-(triméthoxysilyl) hexylsulfonyl azidure.

12. Procédé selon l'une quelconque des revendications 2 à 11, **caractérisé en ce que** le silane est choisi parmi les composés suivants : le 3-aminopropyl-triéthoxysilane, le N-béta-aminoéthyl-3-aminopropyl- triméthoxysilane, le 3-glycidoxypropyl-triméthoxysilane, le 3-mercaptopropyl-triméthoxysilane et le 3-aminopropyl-méthyl- diéthoxysilane.

13. Procédé selon l'une quelconque des revendications 2 à 12, **caractérisé en ce que** le silane est le 3-aminopropyl-triéthoxysilane.

14. Procédé selon l'une quelconque des revendications 1 à 13, **caractérisé en ce que** l'on nettoie la surface en acier inoxydable avant ou pendant l'activation.

**15.** Procédé selon l'une quelconque des revendications 1 à 14, **caractérisé en ce que** la composition de caoutchouc est dépourvue de composé organométallique susceptible de favoriser l'adhésion de la composition à la surface métallique.

**16.** Procédé selon l'une quelconque des revendications 1 à 15, **caractérisé en ce que** la composition comporte une résine renforçante.

**17.** Procédé selon la revendication 16, **caractérisé en ce que** la résine renforçante est du type phénol-formol ou résorcinol-formol.

**18.** Procédé selon la revendication 17, **caractérisé en ce que** le taux de résine renforçante est de 0,1% à 20%, de préférence entre 1% et 8% (% en poids de composition).

**19.** Procédé selon l'une quelconque des revendications 1 à 18, **caractérisé en ce que** le caoutchouc de la composition est du caoutchouc naturel, ou un caoutchouc synthétique choisi parmi polyisoprène, polybutadiène, polychloroprène, caoutchouc butyle, copolymères styrène-butadiène, copolymères acrylonitrile- butadiène-styrène, terpolymères EPDM (éthylène-propylène-diène) et copolymères éthylène-propylène.

**20.** Procédé selon la revendication 19, **caractérisé en ce que** le caoutchouc de la composition est du caoutchouc naturel.

**21.** Article comportant une composition de caoutchouc renforcée d'un corps métallique dont au moins la surface est en acier inoxydable, susceptible d'être obtenu par un procédé selon l'une quelconque des revendications 1 à 20.

**22.** Article selon la revendication 21, **caractérisé en ce qu'**il est une enveloppe de pneumatique.

**23.** Article selon les revendications 21 ou 22, **caractérisé en ce que** le corps métallique est un fil ou un ruban.

**24.** Article selon les revendications 21 ou 22, **caractérisé en ce que** le corps métallique est un câble ou une tringle.

**Claims**

**1.** A process for preparing a rubber article comprising a rubber composition reinforced by, and to which adheres, a metallic body, at least the surface of which is of stainless steel, **characterised by** the following features:

- the stainless steel has a carbon content of 0.02% to 0.2%, a nickel content of 3% to 20%, a chromium content of 12% to 28%, with a total of nickel and chromium of 20% to 35% (% by weight);

- the structure of the stainless steel comprises at least 20% martensite, and it is devoid of austenite or comprises less than 80% thereof (% by volume);

- the surface of the metallic body is activated, at least in part, with an acidic aqueous solution or a plasma;

- this surface is then treated with at least one starting silane so that it is covered with a film of silane(s);

- the surface of the metallic body thus treated is placed directly in contact with the rubber composition, without an adhesive layer;

- curing of the rubber composition is brought about.

**2.** A process according to Claim 1, **characterised in that** the silane has the following formula:

$$R\text{-}Si\text{-}(OR')_{3-a}(R'')_a$$

in which:

- R represents an organic radical containing at least one function capable of reacting with at least one element of the composition;

- each OR' represents a group capable of reacting with an oxide or hydroxide of the surface of the stainless steel;

- each R'' represents, independently, hydrogen, a cyclic or acyclic organic radical, or a halogen;

- a, which may be zero, is at most equal to 2.

**3.** A process according to Claim 2, **characterised in that** R comprises at least one function capable of reacting with at least one rubber of the composition or with at least one resin contained in the composition or with at least one other component contained in the composition.

**4.** A process according to any one of Claims 2 or 3, **characterised in that** R is a hydroxyalkyl, an aminoalkyl, a polyaminoalkyl or an epoxyalkyl.

**5.** A process according to any one of Claims 2 to 4, **characterised in that** R is a glycidylalkyl, a haloalkyl, a mercaptoalkyl, an alkylsulphide or an alkylpolysulphide which may contain a silicon atom, an azidoalkyl, or a cyclic or acyclic radical comprising at least one double bond.

**6.** A process according to any one of Claims 2 to 5, **characterised in that** each R' is, independently, hydrogen or an organic or organometallic, cyclic or acyclic, radical.

7.  A process according to any one of Claims 2 to 6, **characterised in that** when R' is an organometallic radical, it preferably comprises at least one silicon atom.

8.  A process according to any one of Claims 2 to 7, **characterised in that** each R' is, independently, hydrogen, an alkyl having 1 to 6 carbon atoms, an organometallic radical comprising from 1 to 6 carbon atoms and at least one silicon atom.

9.  A process according to any one of Claims 2 to 8, **characterised in that** each R" is, independently, an alkyl having from 1 to 6 carbon atoms.

10. A process according to any one of Claims 2 to 9, **characterised in that** a is equal to 0 or 1.

11. A process according to any one of Claims 2 to 10, **characterised in that** the silane is selected from among the follow compounds: 3-aminopropyl-triethoxysilane, 3-glycidoxypropyl-trimethoxysilane, 3-mercaptopropyl-trimethoxysilane, Nbeta-aminoethyl-3-arninopropyl-trimethoxysilane, 3-amino-propyl-trimethoxysilane, 3-aminoethyl-triethoxysi-lane, 3-glycidoxyethyl-triethoxysilane, 3-mercaptopropyl-triethoxysilane, N-beta-aminoethyl-3-ami-noethyl-trimethoxysilane, 3-aminobutyl-triethoxysi-lane, 3-aminoethyl-trimethoxysilane, 3aminopropyl-methyl-diethoxysilane, bis-triethoxysilylpropyl tetrasulphide, bis-trimethoxysilylpropyl tetrasulphide, p-(trimethoxysilyl)benzyl diazoacetate, 4-(trimethoxysilyl)cyclohexylsulphonyl azide and 6(trimethoxysilyl)hexylsulphonyl azide.

12. A process according to any one of Claims 2 to 11, **characterised in that** the silane is selected from among the following compounds: 3aminopropyl-triethoxysilane, N-beta-aminoethyl-3-aminopropyl-trimethoxysilane, 3-glycidoxypropyl-trimethoxysilane, 3-mercaptopropyl-trimethoxysilane and 3aminopropyl-methyl-diethoxysilane.

13. A process according to any one of Claims 2 to 12, **characterised in that** the silane is 3-aminopropyl-triethoxysilane.

14. A process according to any one of Claims 1 to 13, **characterised in that** the stainless steel surface is cleaned before or during the activation.

15. A process according to any one of Claims 1 to 14, **characterised in that** the rubber composition is devoid of organometallic compound capable of promoting adhesion of the composition to the metal surface.

16. A process according to any one of Claims 1 to 15, **characterised in that** the composition comprises a reinforcing resin.

17. A process according to Claim 16, **characterised in that** the reinforcing resin is of the phenol-formaldehyde or resorcinol-formaldehyde type.

18. A process according to Claim 17, **characterised in that** the amount of reinforcing resin is from 0.1% to 20%, preferably between 1% and 8% (% by weight of composition).

19. A process according to any one of Claims 1 to 18, **characterised in that** the rubber of the composition is natural rubber, or a synthetic rubber selected from among polyisoprene, polybutadiene, polychloroprene, butyl rubber, styrene/butadiene copolymers, acrylonitrile/butadiene/styrene copolymers, EPDM (ethylene/propylene/diene) terpolymers and ethylene/propylene copolymers.

20. A process according to Claim 19, **characterised in that** the rubber of the composition is natural rubber.

21. An article comprising a rubber composition reinforced by a metallic body at least the surface of which is made of stainless steel, which is obtainable by a process according to any one of Claims 1 to 20.

22. An article according to Claim 21, **characterised in that** it is a tyre.

23. An article according to Claims 21 or 22, **characterised in that** the metallic body is a wire or a band.

24. An article according to Claims 21 or 22, **characterised in that** the metallic body is a cable or a bead wire.

**Patentansprüche**

1.  Verfahren zur Herstellung eines Gegenstands aus Kautschuk, der eine Kautschukmischung enthält, die mit einem metallischen Gegenstand verstärkt ist, bei dem zumindest die Oberfläche aus nichtrostendem Stahl besteht und der an der Kautschukmischung haftet, **gekennzeichnet durch** die folgenden Merkmale:

    - der nichtrostende Stahl weist einen Kohlenstoffgehalt von 0,02 bis 0,2 %, einen Nickelgehalt von 3 bis 20 % und einen Chromgehalt von 12 bis 28 % auf, wobei die Summe von Nickel und Chrom im Bereich von 20 bis 35 % (Gew.-%) liegt;

- die Struktur des nichtrostenden Stahls enthält mindestens 20 % Martensit und sie enthält keinen Austenit oder weniger als 80 % (Vol.-%);

- die Oberfläche des metallischen Gegenstands wird zumindest zum Teil mit einer wässrigen sauren Lösung oder einem Plasma aktiviert;

- die Oberfläche wird dann mit mindestens einem Silan behandelt, damit sie mit einem Film aus dem Silan oder den Silanen bedeckt ist;

- die Oberfläche des derart behandelten metallischen Gegenstands wird ohne Haftschicht direkt mit der Kautschukmischung in Kontakt gebracht; und

- die Kautschukmischung wird vulkanisiert.

2. Verfahren nach Anspruch 1, **dadurch gekennzeichnet, dass** das Silan die folgende Formel aufweist:

$$R\text{-}Si\text{-}(OR')_{3-a}(R'')_a$$

worin bedeuten:

- R eine organische Gruppe, die mindestens eine Funktion enthält, die mit mindestens einem Element der Zusammensetzung reagieren kann;

- jede Gruppe OR' eine Gruppe, die befähigt ist, mit einem Oxid oder Hydroxid an der Oberfläche des nichtrostenden Stahls zu reagieren;

- jede Gruppe R'', unabhängig von den anderen Gruppen, Wasserstoff, eine cyclische oder acyclische organische Gruppe oder ein Halogen;

- a höchstens 2, wobei a auch 0 sein kann.

3. Verfahren nach Anspruch 2, **dadurch gekennzeichnet, dass** die Gruppe R mindestens eine Funktion aufweist, die befähigt ist, mit mindestens einem Kautschuk der Zusammensetzung oder mit mindestens einem in der Zusammensetzung enthaltenen Harz oder mit mindestens einer weiteren, in der Zusammensetzung enthaltenen Komponente zu reagieren.

4. Verfahren nach einem der Ansprüche 2 oder 3, **dadurch gekennzeichnet, dass** die Gruppe R ein Hydroxyalkyl, Aminoalkyl, Polyaminoalkyl oder Epoxyalkyl ist.

5. Verfahren nach einem der Ansprüche 2 bis 4, **dadurch gekennzeichnet, dass** die Gruppe R ein Glycidylalkyl, Halogenalkyl, Mercaptoalkyl, Alkylsulfid oder Alkylpolysulfid die gegebenenfalls ein Siliciumatom enthalten können, Azidoalkyl oder eine cyclische oder acyclische Gruppe mit mindestens einer Doppelbindung ist.

6. Verfahren nach einem der Ansprüche 2 bis 5, **dadurch gekennzeichnet, dass** die Gruppen R' unabhängig voneinander Wasserstoff oder eine organische oder Metall-organische, cyclische oder acyclische Gruppe bedeuten.

7. Verfahren nach einem der Ansprüche 2 bis 6, **dadurch gekennzeichnet, dass** die Gruppe R' vorzugsweise mindestens ein Siliciumatom enthält, wenn es sich um eine Metall-organische Gruppe handelt.

8. Verfahren nach einem der Ansprüche 2 bis 7, **dadurch gekennzeichnet, dass** die Gruppen R' unabhängig voneinander Wasserstoff, eine Alkylgruppe mit 1 bis 6 Kohlenstoffatomen oder eine Metall-organische Gruppe bedeuten, die 1 bis 6 Kohlenstoffatome aufweist und mindestens 1 Siliciumatom besitzt.

9. Verfahren nach einem der Ansprüche 2 bis 8, **dadurch gekennzeichnet, dass** die Gruppen R'' unabhängig voneinander Alkylgruppen mit 1 bis 6 Kohlenstoffatomen bedeuten.

10. Verfahren nach einem der Ansprüche 2 bis 9, **dadurch gekennzeichnet, dass** a 0 oder 1 ist.

11. Verfahren nach einem der Ansprüche 2 bis 10, **dadurch gekennzeichnet, dass** das Silan unter den folgenden Verbindungen ausgewählt ist: 3-Aminopropyl-triethoxysilan, 3-Glycidoxypropyl-trimethoxysilan, 3-Mercaptopropyl-trimethoxysilan, N-β-Aminoethyl-3-aminopropyl-trimethoxysilan, 3-Aminopropyl-trimethoxysilan, 3-Aminoethyl-triethoxysilan, 3-Glycidoxyethyl-triethoxysilan, 3-Mercaptopropyl-triethoxysilan, N-β-Aminoethyl-3-aminoethyl-trimethoxysilan, 3-Aminobutyl-triethoxysilan, 3-Aminoethyl-trimethoxysilan, 3-Aminopropyl-methyl-diethoxysilan, Bis(triethoxysilylpropyl)tetrasulfid, Bis(trimethoxysilylpropyl)tetrasulfid, p-(Trimethoxysilyl)benzyl-diazoacetat, 4-(Trimethoxysilyl)-cylcohexylsulfonylazid und 6-(Trimethoxysilyl)-hexylsulfonylazid.

12. Verfahren nach einem der Ansprüche 2 bis 11, **dadurch gekennzeichnet, dass** das Silan unter den folgenden Verbindungen ausgewählt ist: 3-Aminopropyl-triethoxysilan, N-β-Aminoethyl-3-aminopropyl-trimethoxysilan, 3-Glycidoxypropyl-trimethoxysilan, 3-Mercaptopropyl-trimethoxysilan und 3-Aminopropyl-methyl-diethoxysilan.

13. Verfahren nach einem der Ansprüche 2 bis 12, **dadurch gekennzeichnet, dass** das Silan das 3-Aminopropyl-triethoxysilan ist.

14. Verfahren nach einem der Ansprüche 1 bis 13, **dadurch gekennzeichnet, dass** die Oberfläche des nichtrostenden Stahls vor oder während der Aktivierung gereinigt wird.

15. Verfahren nach einem der Ansprüche 1 bis 14, **dadurch gekennzeichnet, dass** die Kautschukmischung keine Metall-organische Verbindung enthält, die die Haftung der Zusammensetzung an der Metalloberfläche fördern kann.

16. Verfahren nach einem der Ansprüche 1 bis 15, **dadurch gekennzeichnet, dass** die Zusammensetzung ein verstärkendes Harz enthält.

17. Verfahren nach Anspruch 16, **dadurch gekennzeichnet, dass** das verstärkende Harz vom Typ Phenol-Formaldehyd oder Resorcin-Formaldehyd ist.

18. Verfahren nach Anspruch 17, **dadurch gekennzeichnet, dass** der Gehalt des verstärkenden Harzes 0,1 bis 20 % und vorzugsweise 1 bis 8 % (Gew.-% der Zusammensetzung) beträgt.

19. Verfahren nach einem der Ansprüche 1 bis 18, **dadurch gekennzeichnet, dass** es sich bei dem Kautschuk der Zusammensetzung um Naturkautschuk oder einen synthetischen Kautschuk handelt, der unter Polyisopren, Polybutadien, Polychloropren, Butylkautschuk, Styrol/Butadien-Copolymeren, Acrylnitril/Butadien/Styrol-Copolymeren, EPDM (Ethylen/Propylen/Dien)-Terpolymeren und Ethylen/Propylen-Copolymeren ausgewählt ist.

20. Verfahren nach Anspruch 19, **dadurch gekennzeichnet, dass** der Kautschuk der Zusammensetzung Naturkautschuk ist.

21. Gegenstand, der eine Kautschukmischung enthält, die mit einem metallischen Gegenstand verstärkt ist, bei dem mindestens die Oberfläche aus nichtrostendem Stahl besteht, erhältlich nach einem Verfahren nach einem der Ansprüche 1 bis 20.

22. Gegenstand nach Anspruch 21, **dadurch gekennzeichnet, dass** es sich um einen Luftreifen handelt.

23. Gegenstand nach Anspruch 21 oder 22, **dadurch gekennzeichnet, dass** der metallische Gegenstand ein Draht oder ein Band ist.

24. Gegenstand nach Anspruch 21 oder 22, **dadurch gekennzeichnet, dass** der metallische Gegenstand ein Seil oder ein Wulstkern ist.